(19) **Europäisches Patentamt / European Patent Office / Office européen des brevets**

(11) **EP 2 075 622 A2**

(12) **DEMANDE DE BREVET EUROPEEN**

(43) Date de publication:
**01.07.2009 Bulletin 2009/27**

(51) Int Cl.:
***G02C 7/02*** *(2006.01)*

(21) Numéro de dépôt: **08020373.0**

(22) Date de dépôt: **24.11.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **27.11.2007 CH 18282007**

(71) Demandeur: **Optofinanz AG**
**6060 Sarnen (CH)**

(72) Inventeur: **Del Nobile, Mauro**
**2034 Peseux (CH)**

(74) Mandataire: **Gaggini, Carlo**
**Brevetti-Marchi**
**Via ai Campi 6**
**6982 Agno (CH)**

(54) **Lentilles ophtalmiques multifocales progressives à distribution constante**

(57) L'invention concerne les verres de lunettes médicales dits progressifs. Le verre progressif est un type de lentille destiné à la réalisation des lunettes pour la correction des défauts de la vision humaine, adaptées à la vision de loin et de près. La présente invention propose de corriger voire éliminer du seuil de perception de l'oeil humain les différences de valeurs de puissance optique indésirables qui caractérisent les verres progressifs d'aujourd'hui, en maîtrisant sur toute la surface de la lentille une répartition uniforme de la progression de la puissance optique de correction. Il en résulte une augmentation significative de la taille de chacun des champs de vision de loin et surtout de près, en éliminant aussi totalement l'obstacle d'aujourd'hui d'une mince zone de transition (de moins de 5mm de largeur) située approximativement à la méridienne soit près du centre du verre (Figure 07)

**Fig. 07**

EP 2 075 622 A2

**Description**

DOMAINE TECHNIQUE:

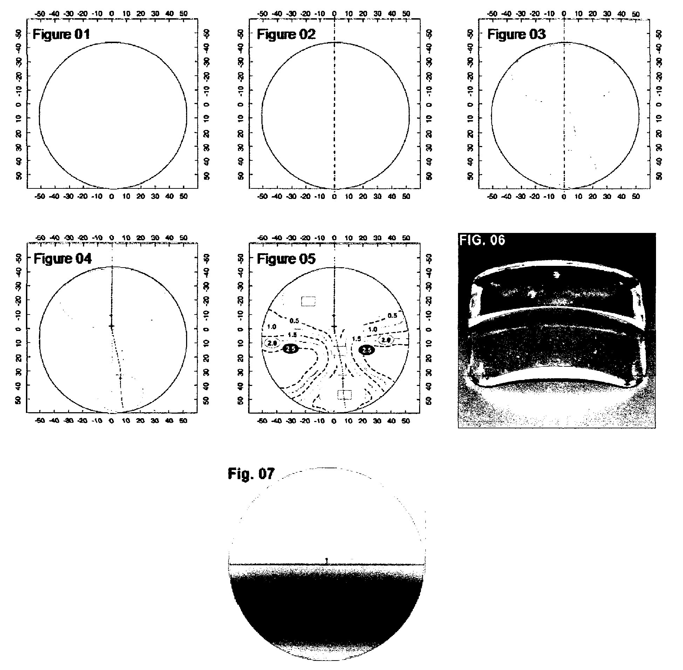

Les verres progressifs constituent une version des lunettes médicales comportant une puissance optique progressivement variable, qui présentent des zones adaptées à la vision de loin et de près (représentées en figure 03) ; contrairement à une lentille unifocale ou lunette conventionnelle (représentée en figure 01, et 02 avec méridienne) qui comporte une puissance optique quasi constante en tous points de sa surface. Un verre progressif actuel comporte plusieurs zones de vision, tout en ne présentant pas de discontinuité de surface : la zone de vision de loin pour la moitié supérieure du verre, et la zone de vision de près dans la moitié inférieure du verre. Les sujets concernés sont tous les individus quelles que soient leurs caractéristiques de vision, (vision normale, myope, hypermétrope, astigmate, ou toute combinaison de ces différentes familles de vison). En moyenne vers quarante ans, s'ajoute pour chacun une nouvelle particularité de vision nommée : PRESBYTIE. Cela commence en fait dès la venue au monde ; en effet, le cristallin qui est la partie de l'oeil responsable de la faculté d'accommodation (mise au point) cesse d'être vascularisé dès la naissance, et dès lors il se comporte un peu comme un tronc d'arbre en accumulant les couches au fil du temps, cela le faisant durcir et perdre de sa souplesse. De plus, les ultraviolets contenus dans la lumière naturelle ainsi que la chaleur participent à précipiter cette dégradation irréversible.

ETAT DE LA TECHNIQUE :

Les fabricants de verres progressifs expliquent, (si l'on se réfère notamment aux brevets suivants :

- FR 2058499 : voir figures 11 ; 12 ; 13 ; FR 2617989 : voir figures 5 & 6 ; FR 2683642
- FR 2683643 ; FR 2699294 : fig. 6; 7; 8; 9 ; FR 2753805 : fig. 15 ; FR 2788861 : fig. 6 & 7 ; US Patent 3'711'191 ; US Patent 3'910'691 ; US Patent 4'055'379 ; US Patent 4'315'673 ; US Patent 4'606'622 ; US Patent 4'946'270 ; US Patent 5'270'745 ; US Patent 5'488'442 ; US patent 6'832'834B2 ; US Patent 5'784'144 ; US patent 5'949'519 ; US Patent 6'302'540 B1. émanant des plus grands leaders mondiaux de l'optique spécialisés en verres progressifs), que les lentilles progressives comprennent des "zones de vision", généralement appelées zone de vision de loin, et zone de vision de près, avec entre elles une zone intermédiaire (voir "zones de vision" en figure 03). La partie supérieure de la lentille est utilisée par le porteur de lunettes pour regarder au loin, c'est donc la zone de vision de loin ; la partie inférieure de la lentille est utilisée par le porteur pour lire ou regarder de près, c'est donc la zone de vision de près ; entre ces deux zones de loin et de près se situe une zone appelée zone de vision intermédiaire, zone de transition, ou encore "corridor". La méridienne de progression est une ligne virtuelle balayée par le regard du porteur de lunettes regardant de haut en bas droit devant lui donc au centre du verre, méridienne qui traverse donc les trois zones de vision ; pour favoriser l'accommodation lors de la lecture rapprochée, la zone de vision de près est décentrée (en direction du nez du porteur pour chaque verre), par rapport à la méridienne (voir figure 04, zones de vision et méridienne, avec axe décentré pour la zone de vision de près). Du fait que chacune de ces zones de vision ne représente qu'une portion du verre, il faut calibrer le positionnement des verres de lunettes par rapport au regard du porteur, pour optimiser le "couplage" oeil / verre de lunette ; pour ce faire, les zone de vision comportent un repère

ou référence, nommées "VL" pour Vision de Loin, l'autre point usuel de référence étant le point "VP" pour Vision de Près ; la position de ces référence étant normalisée au niveau international (ISO).

ETAT DE LA TECHNIQUE (suite 1) ; Un verre progressif réalisé avec les techniques d'aujourd'hui est très imparfait, car elles entraînent inévitablement d'importantes conséquences optiques indésirables, qui rendent généralement l'acceptation fort difficile par le jeune porteur de verres progressifs, notamment une zone de vision de loin présentant des variations de correction jusqu'à plus de 0.25dpt (dioptries) entre le centre et la périphérie du verre pour cette même zone, mais surtout une zone de vision de près réduite à une seule petite portion de la partie inférieure du verre ; la différence de puissance optique entre ces deux zones est elle nommée l'addition, la transition entre ces deux zones étant caractérisée aujourd'hui par un seul petit couloir de bonne correction (donc de bonne vision) nommé "corridor". Aujourd'hui, les deux zones vision de loin et vision de près comportent par endroit des valeurs de puissances optiques faussées (allant jusqu'à plus de 100% d'erreur) entre un endroit et l'autre du verre séparées de quelques millimètres seulement, par rapport aux valeurs idéales recherchées, et ce pour tous types de corrections et d'additions, les fortes corrections de progression ayant les valeurs de défauts optiques les plus importants et les plus marqués. Ces défauts majeurs et incontournables caractérisent aujourd'hui toutes les marques spécialisées en verres progressifs ; c'est la situation de l'état de l'art.

Un théorème géométrique (Minkwitz, 1961 et 1963) d'ailleurs souvent cité comme référence par les experts des verres progressifs, expose en détail les limites et conséquences des réalisations de verres progressifs basées sur le seul concept général alors en vigueur, concept de base toujours unique utilisé jusqu'à ce jour : soit deux portions de sphère de rayons différents, en tangence à leur méridienne, avec une "zone de recouvrement" les reliant pour éviter une discontinuité de surface ; (voir l'explication concise et détaillée dans : "Etat de la technique - résumé" ci-après).

Pour le porteur de lunettes, ces larges zones où la correction optique est inadéquate provoquent une perturbation de la vision statique et dynamique, en diminuant fortement les zones de vision nette, lesquelles sont donc limitées aux deux petites zones de vision intermédiaire et vision de près, et à celle un peu plus grande mais imparfaite de vision de loin, comme représenté en figure 04.

Comme résultante générale à ce problème, le porteur de lunettes ne dispose finalement d'une bonne vision (vision nette) que sur une portion réduite du verre progressif (à peine 55 à 60% suivant les variantes), ce qui crée évidemment une gêne permanente et un inconfort, donnant ou porteur l'impression de tangage lorsqu'il tourne la tête d'un côté ou de l'autre. Pour compenser ce problème et rechercher de voir net, le porteur est obligé de réduire la mobilité de ses yeux et tourner davantage la tête, cela s'ajoutant encore à son inconfort, l'effet de tangage reste cependant toujours présent, ne pouvant lui s'atténuer par un changement de l'axe de vision de yeux.

Ces défauts d'inadéquation de la puissance optique s'accentuent en fonction de l'augmentation de puissance dite de progression (ou addition) de la lentille - soit la différence de correction entre la zone vision de loin et celle de près - cela aggravant de surcroît l'inconfort du porteur de lunettes ayant des corrections de progression plus importantes (le problème de presbytie s'accentue avec l'âge, nécessitant au fur et à mesure des valeurs de progression ou d'addition supérieures). L'utilisation par le regard du porteur de la surface des lentilles est donc limitée par les zones d'inadéquation de la puissance optique, qui constituent une partie importante de la surface des verres progressifs.

Les zones d'inadéquation de la puissance optique correspondent à une non linéarité ou déformation produite par la lentille, la valeur de la puissance optique de correction étant finalement substantiellement différente à celle recherchée ; des valeurs d'erreur de 2,5 dioptries sont courantes dans ces zones latérales d'inadéquation de la lentille, valeur d'erreur qui est très importante : pour référence, une myopie de 2,5 dioptries correspond à une acuité visuelle à peine supérieure à $^{1}/_{10}$.

ETAT DE LA TECHNIQUE (suite 2) :

Ces valeurs d'inadéquation optique sont mentionnées à titre d'exemple, car les valeurs de correction appliquées à la lentille sont bien évidemment spécifiques à chaque porteur et influent directement au cas par cas sur la valeur de ces défauts, ce type de défaut restant cependant et sans exception aucune un dénominateur commun à tous les verres progressifs d'aujourd'hui. Ces défauts représentent en fait une surface importante de la lentille dans laquelle la correction obtenue n'est pas la correction nominale optimum souhaitée, zones dans lesquelles les valeurs d'inadéquation vont toujours croissant de part et d'autre de la méridienne en direction de chaque bord latéral de la lentille. Une représentation de ces zones d'inadéquation s'effectue usuellement par des lignes dites d'iso puissance (fig. 05) chaque ligne suivant une valeur de variation de la puissance optique, lignes qui délimitent ainsi les zones de variation des valeurs de correction optique ; la quantité de ces courbes n'est pas limitée, car dépendant uniquement de la résolution (échelle) utilisée pour effectuer le relevé de ces variations.

Donc un relevé effectué toutes les 0,1 dioptries donnerait plusieurs dizaines de courbes ou zones de variation de la puissance optique, chacune à une différente valeur; comme il en ressort de cette figure 05 ces zones ne sont généralement pas symétriques de part et d'autre de la méridienne, du fait du décentrage volontaire - déjà mentionné - de la zone de vision de près, pour qu'elle soit en adéquation avec la convergence des yeux lorsque l'on regarde de près, (chaque oeil regardant le même point, ils doivent donc converger davantage plus l'on regarde de près).

ETAT DE LA TECHNIQUE (résumé) :

En résumé de l'état de l'art, la surface progressive d'un verre progressif actuel ou "classique" comporte deux zones sphériques : la moitié supérieure pour la "vision de loin" d'un rayon Rmax, et une portion de la moitié inférieure pour la "vision de près", d'un rayon Rmin. Au vu de la différence des deux rayons Rmax Rmin, et afin de ne pas créer de discontinuité ou "saut" entre les deux portions sphériques, une surface de "recouvrement' ou transition relie ces deux zones sphériques, (sinon la lentille présenterait une discontinuité allant croissant, de la méridienne à chaque bord latéral du verre, comme les verres bifocaux à l'ancienne, voir fig. 06). Du fait de cette conception "à deux portions sphériques reliées" l'ajustage du recouvrement entre la portion de sphère supérieure et la portion de sphère inférieure n'est pas constant et ne peut pas l'être (comme explicitement défini par Minkwitz et ses théorèmes de 1961 et 1963), puisque la différence de rayon entre les deux surfaces sphériques fait que le raccord d'ajustage (recouvrement) change continuellement de la méridienne à chaque bords latéral du verre, et c'est précisément cette variation continue de la transition entre les deux surfaces sphériques qui provoque à ces endroits des résultats optiques non contrôlés, créant de larges surfaces d'anomalies optiques dans les zones latérales inférieures, là où les variations de la transition sont les plus importantes, soit de part et d'autre de la méridienne.

ETAT DE LA TECHNIQUE (conclusion) :

Les défauts des verres progressifs d'aujourd'hui sont avérés, puisque décrits en détail et donc reconnus, par les plus grands leaders ou multinationales présents sur les marchés internationaux. En conclusion, les verres progressifs existants présentent des caractéristiques de défauts bien identifiés et très conséquents ; la marge pour envisager d'avantageuses améliorations est donc bien évidemment elle aussi très conséquente.

La présente invention propose de corriger voire éliminer du seuil de perception de l'oeil humain les défauts d'inadéquations de la puissance optique des verres progressifs, en maîtrisant sur toute la surface de la lentille la répartition de la progression de la puissance optique ; pour le porteur de lunettes ayant de telles lentilles progressives "corrigées", il en résulte un élargissement décisif du champ de vision, amélioration qui s'étends de façon identique et uniforme à l'entier de la surface de la lentille, éliminant ainsi l'obstacle de devoir subir le défaut gênant des verres progressifs actuels qui comportent obligatoirement de par la méthode de constitution de leur surface d'importantes zones d'inadéquation de la puissance optique, sur plus du tiers de celle-ci.

Pour éviter ces défauts l'invention génère la distribution de la surface progressive selon des bases totalement novatrices, pour assurer la même valeur optique sur chaque ligne horizontale de gauche à droite du verre progressif, et ce quelle que soit la position d'angle vertical du regard par rapport à l'horizontale, donc en résolvant le cas pour l'entier de la surface de la lentille, tout en n'ayant aucune discontinuité de surface.

Rappel : Un verre progressif actuel ou "classique", comporte donc les deux zones sphériques déjà mentionnées (moitié supérieure pour la "vision de loin" d'un rayon Rmax, et une portion de la moitié inférieure pour la "vision de près", d'un rayon Rmin), cela impliquant au vu de leur différence de rayons Rmax Rmin une surface de "recouvrement" ou transition qui relie ces deux zones sphériques, afin de ne pas créer de discontinuité "physique ou mécanique" entre ces deux zones. Cette "surface de transition" crée cependant des irrégularités optiques gênantes tout particulièrement dans les zones latérales de la moitié inférieure de chaque verre de la lunette.

Impératifs :

Pour résoudre le cas, la courbe méridienne doit satisfaire les conditions définies suivantes :

1. Présenter un rayon Rmax correspondant à la focale voulue pour la vision de loin, en formant une partie de sphère constituant la portion supérieure (zone de vision de loin) de la lentille.

2. Comporter une partie avec un rayon Rmin<Rmax correspondant à la focale voulue pour la vision de près, dans la partie inférieure (zone de vision de près) de la lentille.

3. Comporter une transition entre ces deux rayons, laquelle doit satisfaire les conditions spécifiques suivantes :

a. Continuité - la courbe ne doit pas présenter de discontinuité de surface (ne pas faire de "saut" ou "d'escalier", afin de permettre une vision progressive continue).

b. Continuité des tangences : de Rmax à Rmin, la courbe doit continuellement assurer la tangence entre chaque valeur de rayon : le rayon "précédent" et le rayon "suivant", rayons définis par la valeur de progression ou d'addition ainsi que le gradient voulu pour cette progression - soit combien de dioptries d'addition pour chaque millimètre parcouru sur la lentille - ; (donc la définition exacte du "Δ de courbure" entre la vision de loin et la vision de près).

c. Continuité des courbures : le rayon de courbure doit varier entre Rmax et Rmin de façon continue, (ce qui distingue une lentille progressive des autres types de lentilles, unifocale, bifocale ou trifocale, par exemple), de la méridienne à chaque bord latéral de la lentille.

Ces conditions définissent une infinité de méridiennes puisqu'il existe une infinité de fonctions R(y) donnant le rayon en fonction de la cote verticale telles que R(0)=Rmax, R(ymin)=Rmin, et R continue et décroissante entre ces deux valeurs. En liant en chaque point la courbure souscrivant aux impératifs ci-dessus à un (ou des) axe(s) virtuel(s) d'origine ou non selon l'allure de courbure choisie, le profil modelée par ces courbures peut développer une surface par révolution en X, et ce pour toute variante de courbure Y voulue. La surface ainsi obtenue peut alors être caractérisée par des méthodes usuelles pour produire des fichiers conventionnels "3D" - fichiers XYZ, ou tout autres.

Cette construction est schématisée comme exemple dans la figure ci-dessous, par une méridienne constituée de 3 arcs tangents, dont les rayons sont liés à la distance horizontale d'un point de l'arc à l'axe de révolution :

Calcul de la méridienne :

La courbe de la méridienne recherchée comporte donc une partie progressive z(y) définie par sa courbure, qui est la dérivée seconde de la courbe notée z"(y). (Rappel : la courbure est l'inverse du rayon de courbure) Plus exactement z(y) est la solution de l'équation différentielle :

$$\frac{1}{z''(y)} = R_{max} - z(y)$$

Avec les "conditions initiales" z(0)=0 et z'(0)=0 pour assurer la continuité et la tangence à l'origine, point de contact avec la partie supérieure de la méridienne de rayon Rmax.

Cette équation différentielle n'est cependant pas linéaire et requiert l'utilisation d'un logiciel de calcul symbolique comme Mathematica [1] pour en obtenir le résultat, exprimé par la formule suivante :

$$z(y) = R_{max} \left( 1 - e^{-\text{inverf}\left(\frac{y}{R_{max}}\sqrt{\frac{2}{\pi}}\right)^2} \right)$$

"inverf" est ici la fonction inverse de la "fonction d'erreur de Gauss" notée "erf" [2], fréquemment rencontrée en statistique, mais dont la présence dans une solution géométrique est assez surprenante de prime abord. Du résultat obtenu via l'expression mathématique ci-dessus, il faut remarquer l'absence de "constante d'intégration", qui implique qu'il n'existe qu'une seule et unique courbe satisfaisant les conditions imposées.

Références :

1. Wolfram Research, éditeur du logiciel "Mathematica"   : http://www.wolfram.com
2. Wikipédia, sur la fonction "erf"                      : http://fr.wikipedia.org/wiki/Fonction d'erreur

Des lentilles ou verres progressifs réalisés sur les bases décrites ci-dessus ont permis de vérifier concrètement l'adéquation du procédé novateur de génération des surfaces progressives ; un exemple de valeur optique mesurée sur un des échantillons de lentille physiquement réalisés est donné en figure 07.
L'on peut constater une distribution constante des valeurs optiques, la progression étant effectivement identique, de la méridienne jusqu'à chaque bord latéral du verre.
La surface progressive obtenue est "à distribution constante" ; cette méthode convenant aussi bien pour générer la surface progressive sur la face interne du verre, sa face externe, que sur les deux faces simultanément, les courbures des profils devant auparavant être calculés en conséquence.

Un fichier d'une telle surface "à distribution constante" généré par exemple pour une grille 3D au pas de 0.25mm et pour une surface de 84mmX84mm (au final une lentille de 84 mm de diamètre pour ce cas), produit 113'569 points (cent treize mille cinq cent soixante neuf) pour une des faces du verre, et bien qu'il soit parfaitement possible de calculer ceux-ci "à la main" en appliquant le descriptif exposé ci-dessus, une certaine recherche d'efficacité voudrait que l'on rentre les paramètres exposés ci-dessus dans un processus de calcul automatique (informatique par exemple), afin d'éviter un long et fastidieux travail au profit d'une légitime efficacité souhaitable pour une exploitation industrielle).

Liste Des Dessins

-   Figure 01 : lentille ophtalmique unifocale, puissance optique.

-   Figure 02 : lentille ophtalmique unifocale, puissance optique et méridienne.

-   Figure 03 : lentille ophtalmique multifocale progressive, zones de vision et méridienne.

-   Figure 04 : lentille ophtalmique muftifocale progressive, axe zone de vision de près et méridienne.

-   Figure 05 : lentille ophtalmique multifocale progressive, zones de vision avec valeurs isométriques.

-   Figure 06 : lentille ophtalmique bifocale, zones de vision avec "saut" ou "escalier" entre les deux zones de près et loin.

-   Figure 07 : lentille ophtalmique multifocale progressive, fruit de la présente invention, progression avec valeurs optiques de distribution constante.

**Revendications**

1.   Verre progressif ayant une puissance optique progressive constante sur toute sa surface, **caractérisé par** une surface balayée par une ligne courbe arrimée à un ou plusieurs axe(s) d'origine, pour générer en développant par révolution une surface progressive ayant des valeurs de puissance optique uniformes de gauche à droite du verre par rapport à la méridienne, puissance optique se présentant sous la forme d'une "distribution constante".

2.   Verre progressif selon la revendication **1 caractérisé en ce que** la révolution de la ligne courbe peut s'effectuer autour d'un ou plusieurs axes.

3.   Verre progressif selon la revendication **1 caractérisé en ce que** la ligne courbe destinée à générer la surface progressive comporte un rayon Rmax correspondant à la focale voulue pour la vision de loin.

4.   Verre progressif selon la revendication **1 caractérisé en ce que** la ligne courbe destinée à générer la surface comporte un rayon Rmin correspondant à la focale voulue pour la vision de près.

5.   Verre progressif selon les revendications **1** à **4, caractérisé en ce que** les rayons Rmax et Rmin ainsi que toute valeur intermédiaire entre Rmax et Rmin de la ligne courbe, sont en tangence en tout lieu de la ligne courbe et donc de la surface générée.

6.   Verre progressif selon les revendications **1** à **5 caractérisé en ce que** le ou les axe(s) de révolution peuvent être identiques, partiellement identiques et partiellement différents, ou différents des valeurs de rayon allant de Rmax à Rmin.

Figure 01

Figure 02

Figure 03

Figure 04

Figure 05

FIG. 06

Fig. 07

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2058499
- FR 2617989
- FR 2683642
- FR 2683643
- FR 2699294
- FR 2753805
- FR 2788861
- US 3711191 A
- US 3910691 A
- US 4055379 A
- US 4315673 A
- US 4606622 A
- US 4946270 A
- US 5270745 A
- US 5488442 A
- US 6832834 B2
- US 5784144 A
- US 5949519 A
- US 6302540 B1